# DEMANDE DE BREVET EUROPEEN

(11) **EP 0 963 776 A1**
(43) Date de publication de la demande: **15.12.1999**
(21) Numéro de dépôt: 99110113.0
(22) Date de dépôt: 25.05.1999
(51) Int. Cl.: B01D 53/02, B01D 39/00

(54) **Dispositif de filtration combine susceptible de retenir des particules ainsi que des gaz**

(30) Priorité: 10.06.1998 FR 9807273
(71) Demandeur: VALEO, 75017 Paris (FR)
(72) Inventeur: Guerin, Richard, 61100 Ronfeugerai (FR); Legrand, CLaude, 14110 Conde sur Noireau (FR); Jacq, Gérard, 61430 Athis de l'Orne (FR)
(74) Mandataire: Gamonal, Didier

(57) **Abrégé**

La présente invention a pour objet un dispositif de filtration combiné susceptible de retenir des particules ainsi que des gaz. Un tel dispositif de filtration est plus particulièrement destiné à l'épuration de l'air destiné à l'aération et/ou au chauffage et/ou à la climatisation de locaux ou de véhicules automobiles. Il comprend deux couches de non-tissé entre lesquelles sont disposés des granulés de charbon actif ; les deux couches de non-tissé s'interpénètrent, au moins partiellement, de manière à emprisonner les granulés de charbon actif.

## Description

La présente invention a pour objet un dispositif de filtration combiné susceptible de retenir des particules ainsi que des gaz. Un tel dispositif de filtration est plus particulièrement destiné à l'épuration de l'air destiné à l'aération et/ou au chauffage et/ou à la climatisation de locaux ou de véhicules automobiles.

L'invention a également pour objet le procédé de réalisation d'un tel dispositif de filtration.

Les dispositifs de filtration connus comprennent en général un élément, dit filtre à particules, arrêtant les particules solides véhiculées par l'air et un élément, dit filtre à odeurs, constitué essentiellement par du charbon actif.

Le charbon actif se présente sous forme de granulés poreux qui sont disposés en aval du filtre à particules.

Le problème majeur qui se pose réside alors dans l'insertion et le maintien des granulés de charbon actif dans le dispositif de filtration.

On a proposé l'emploi de particules liantes mélangées avec les granulés de charbon actif, qui assurent la fixation de ces derniers sur le support où elles sont placées, en pratique le filtre à particules.

L'efficacité d'un tel filtre à odeurs n'est pas optimum pour deux raisons. En premier lieu, la présence de particules liantes diminue d'autant la quantité de granulés de charbon actif. En outre, les particules liantes ont pour objet de coller les granulés de charbon actif sur un support, mais de ce fait, une partie importante de la porosité de ces derniers est obstruée, ce qui diminue leur capacité de rétention de gaz et augmente ta perte de charge du filtre à odeurs.

La présente invention a pour objet de pallier les inconvénients de la technique antérieure.

Un dispositif de filtration, selon l'invention, est caractérisé en ce qu'il comprend deux couches de non-tissé entre lesquelles sont disposés des granulés de charbon actif et en ce que les deux couches de non-tissé s'interpénètrent, au moins partiellement, de manière à emprisonner les granulés de charbon actif.

Ainsi les granulés de charbon actif sont maintenus en place sans avoir recours à du collage et la capacité de retenue de gaz nocifs du dispositif de filtration est considérablement améliorée. En outre, la perte de charge que le dispositif de filtration introduit dans la circulation d'air est fortement réduite.

Selon d'autres caractéristiques de l'invention prises séparément ou dans toutes leurs combinaisons techniquement possibles :
- la première couche de non tissé et/ou la seconde couche de non-tissé est/sont formée(s) d'un voile de carde isotrope ou anisotrope comprenant des fibres de même nature ou un mélange de fibres différentes ;
- ledit voile est en une seule couche ;
- la longueur desdites fibres est au moins égale à 5 mm ;
- la longueur desdites fibres est au plus égale à 120 mm ;
- le diamètre moyen desdites fibres est au moins égal à 1 µm ;
- les granulés de charbon actif ont une taille comprise entre 20 et 50 mesh et une surface spécifique de 500 à 2000 m²/g ;
- la quantité de charbon actif représente 5 à 95 % de la masse de l'ensemble première couche de non-tissé, lit de charbon actif, seconde couche de non-tissé;
- la masse surfacique dudit ensemble est comprise entre 50 et 600 g/m² ;
- lesdites fibres sont choisies parmi le groupe des fibres thermoplastiques telles que les fibres de polypropylène, de polyéthylène, de polyimide, de polyester, de polycarbonate, de polyamide, le groupe des fibres acryliques, des fibres acryliques préoxydées, le groupe des fibres aramides, le groupe des fibres phénoliques, le groupe des fibres fluorocarbonées, le groupe des fibres minérales telles que les fibres de verre, le groupe des fibres métalliques.

Le procédé de réalisation d'un dispositif de filtration, selon l'invention, est caractérisé par les étapes suivantes :
a) une première couche de non-tissé est réalisée;
b) des granulés de charbon actif sont déposés sur ladite première couche de non-tissé pour former un lit de charbon actif ;
c) une seconde couche de non-tissé est déposée sur ledit lit de charbon actif ;
d) l'ensemble constitué de la première couche de non-tissé, du lit de charbon actif et de la seconde couche de non-tissé est l'objet d'une opération de consolidation mécanique.

Selon d'autres caractéristiques du procédé, selon l'invention, prises séparément ou dans toutes leurs combinaisons techniquement possibles :
- l'opération de consolidation mécanique est réalisée par liage hydraulique ;
- après liage hydraulique ledit ensemble subit une opération de séchage ;
- l'ensemble première couche de non-tissé, lit de charbon actif, seconde couche de non-tissé, subit après la consolidation mécanique et avant ou après séchage une opération de plissage ;
- après l'étape a) et avant l'étape b) ci-dessus, la première couche de non-tissé subit une opération de consolidation mécanique au moyen d'un liage hydraulique ;
- à l'étape b) ci-dessus, les granulés de charbon actif sont déposés sur la première couche de non-tissé humide, ce qui facilite et assure le maintien en place des granulés jusqu'à l'étape d) ci-dessus ;
- la première couche de non-tissé et/ou la seconde couche de non-tissé est/sont obtenue(s) par une opération de cardage de fibres présentant une longueur comprise entre 5 mm et 120 mm et un diamètre supérieur à 10µm, pour former un voile de carde isotrope ou anisotrope ;
- l'opération de cardage est réalisée au moyen d'une carde de type laine ;
- ladite carde comporte des brouilleurs de type 〈〈 pêle-mêle 〉〉 ;
- le liage hydraulique consiste à faire traverser le voile disposé sur un tambour rotation par des jets d'eau très fins sous haute pression ;
- la pression des jets d'eau est comprise entre 40 et 200 bars.

D'autre aspects et avantages de l'invention apparaîtront dans la description ci-après d'un exemple de réalisation d'un dispositif de filtration destiné à être placé dans un appareil de chauffage/climatisation de véhicule automobile, en référence aux dessins annexés qui représentent :
- à la figure 1, une vue schématique partielle, en coupe, d'un dispositif de filtration selon l'invention;
- à la figure 2, une vue de face du dispositif de filtration de la figure 1 ;
- aux figures 3 et 4, des vues schématiques montrant la solidarisation d'une grille au cadre du dispositif de filtration ;
- aux figures 5a et 5b, une illustration des propriétés de souplesse du filtre ;
- à la figure 6, une représentation schématique de la fabrication du dispositif de filtration selon l'invention.

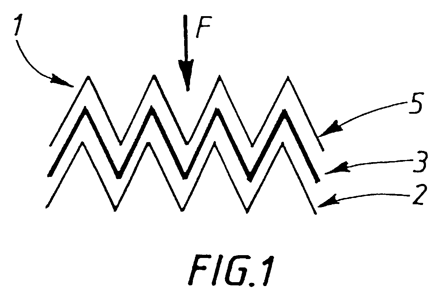

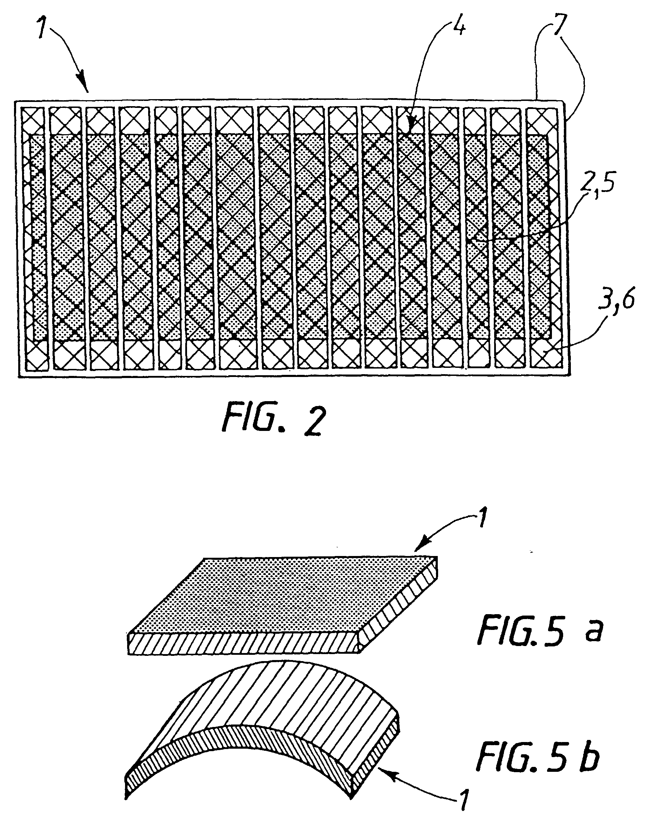

Le dispositif de filtration 1 des figures 1 et 2 comporte une grille souple 2 plissée contre laquelle est disposé, sans lui être solidarisé, un média filtrant 3 formant filtre combiné, formé d'un mat de non-tissé constitué d'un sandwich comprenant en son centre du charbon actif. Le média filtrant 3 est lui-même plissé de la même manière que la grille 2.

Selon l'invention le filtre combiné est formé d'un sous-ensemble 3 comprenant deux couches de non-tissé entre lesquelles sont disposés des granulés de charbon actif ; les deux couches de non-tissé s'interpénètrent, au moins partiellement, de manière à emprisonner les granulés de charbon actif.

Ledit mat de non-tissé et à base de fibres longues dont la longueur est, de préférence, au moins égale à 5 mm. Lesdites fibres longues présentent un diamètre moyen égal ou supérieur à 1 µm. Lesdites fibres sont en matériau thermoplastique et, en pratique, en polypropylène.

La grille 2 est en polypropylène. Elle se trouve placée en aval par rapport au sens F de circulation de l'air dans le dispositif de filtration.

Selon l'exemple de la figure 1, une seconde grille souple 5 plissée est prévue en sorte que le média filtrant 3 se trouve placé entre les grilles 2 et 5 sans être solidarisé ni à l'une ni à l'autre des deux grilles 2 et 5.

De préférence, la seconde grille, dite d'entrée, est placée en amont du média 3 selon le sens F de circulation de l'air dans le dispositif de filtration.

Avantageusement, la seconde grille 5 est de même nature que la grille 2 et est en polypropylène.

En variante, les deux grilles 2 et 5 sont de nature différente.

Le dispositif de filtration des figures 1 et 2 présente une construction symétrique qui permet avantageusgment son montage indifféremment dans un sens ou l'autre dans un appareil de chauffage et/ou ventilation et/ou climatisation, ce qui rend inutile de prévoir, dans ce cas, un détrompeur pour le sens de montage. Le dispositif de filtration est ainsi réversible. Bien entendu, dans ce cas la grille d'entrée peut jouer le rôle de grille de sortie et, inversement, la grille de sortie jouer le rôle de grille d'entrée.

Un cadre souple est prévu pour supporter les différents constituants du dispositif de filtration. Un tel cadre souple est montré en 7 sur la figure 2.

Le cadre 7 est réalisé en mousse de polypropylène ou, en variante, en polypropylène alvéolaire, et est solidarisé à la grille de sortie 2 ou à la grille d'entrée 5, et de préférence aux deux grilles 2 et 5 quand toutes les deux sont prévues.

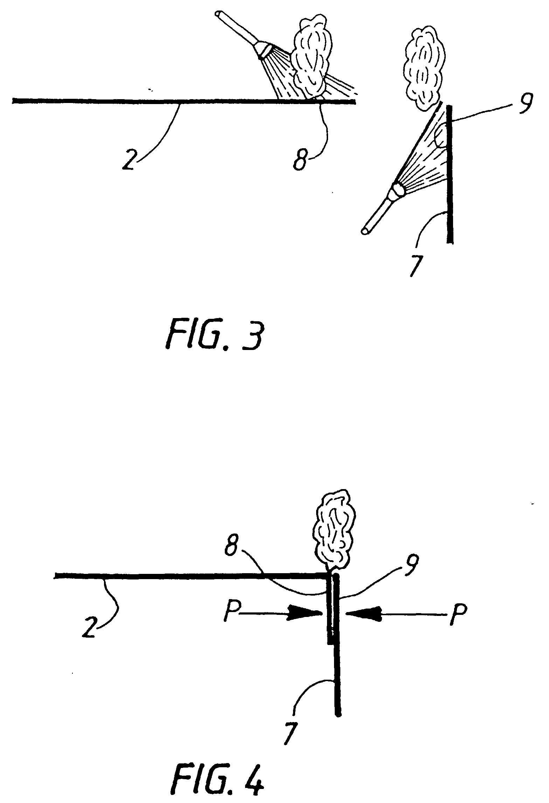

La solidarisation d'une grille 2 ou 5 au cadre 7 s'effectue avantageusement, comme symbolisé aux figures 3 et 4, par une opération dite de soudure miroir qui consiste à chauffer simultanément jusqu'au début de fusion une partie périphérique 8 de la grille 2 ou 5 d'une part, et une portion 9 du cadre 7 correspondant à la zone de fixation d'autre part, puis à rapprocher et serrer l'une contre l'autre la partie périphérique 8 et la portion 9 précitées de manière à exercer une pression relative symbolisée par les flèches P de la figure 4.

L'opération de soudure miroir est conduite de telle manière que l'extrémité latérale 8 de la grille 2 ou 5 soit amenée à se plier à angle droit pour épouser la face interne correspondante du cadre 7, ce qui a pour avantages d'assurer une meilleure fixation de la grille et d'éviter toute fuite d'air entre grille et cadre.

Avantageusement, plusieurs parties périphériques 8 et portions 9 correspondantes, et de préférence toutes les quatre, de la grille 2 ou 5 et du cadre 7 sont ainsi fixées entre elles.

Comme représenté sur la figure 2, les deux grilles 2 et 5 sont fixées au cadre 7 de la manière qui vient d'être décrite.

La même nature chimique (polypropylène) de la grille 2 ou 5 et du cadre 7 permet une fixation solide et durable.

Lors de l'opération de soudure miroir, le sous-ensemble 3 est apposé contre la ou les grilles 2 et/ou 5 correspondantes.

En variante non représentée, le cadre est moulé autour de la grille 2 ou 5 ou des deux grilles 2 et 5 ainsi que sur le sous-ensemble 3.

Avantageusement, comme montré en 4 sur la figure 2, les moyens d'adsorption à base de charbon actif présentent sur un côté au moins, et avantageusement sur les quatre côtés, une étendue inférieure à celle de la grille 2 et/ou 5 ainsi que, de préférence, du sous-ensemble 3.

De la sorte, les moyens d'adsorption sont écartés du cadre 7. Ceci présente l'avantage que la présence des moyens d'adsorption ne perturbe pas la fixation des grilles au cadre.

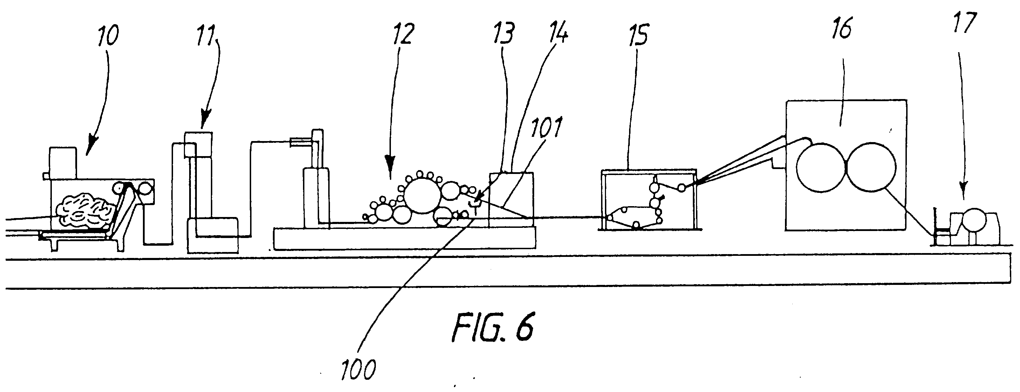

Grâce à la constitution ainsi décrite du filtre, celui-ci présente des caractéristiques intéressantes de souplesse qui permettent de le courber momentanément, comme montré aux figures 5a et 5b, voire même de le vriller, afin d'introduire plus facilement le filtre dans un appareil de chauffage et/ou ventilation et/ou climatisation de véhicule automobile, ou de l'en extraire. Ceci est particulièrement avantageux lorsque, comme c'est très souvent le cas, l'accessibilité au logement du filtre est difficile.

La figure 6 illustre un procédé préférentiel de fabrication d'un dispositif de filtration décrit précédemment.

Des fibres de polypropylène d'une finesse de 2,8 dtex coupées à une longueur de 50 mm sont introduites dans un mélangeur.

Le mélange de fibres obtenu est ensuite introduit dans une démoteuse 10 puis dans un silo de stockage 11 avant d'être cardé au moyen d'une carde de type laine 12 à double peigneur équipée d'un brouilleur de type pêle-mêle afin d'obtenir deux voiles de carde isotropes 100 et 101, chacun formant une couche de non-tissé.

Sur l'un des voiles 100 est déposé, par saupoudrage, au moyen d'une saupoudreuse 13, une couche de granulés de charbon actif. En variante, non représentée, le charbon actif est projeté sur le voile 100.

Les voiles 100 et 101 sont ensuite introduits et superposés dans un condenseur 14 pour former une nappe, de telle manière que la couche de granulés de charbon actif soit située entre les deux voiles.

Les paramètres de la carde et du condenseur sont choisis de manière à obtenir deux voiles présentant chacun une masse surfacique d'environ 20 à environ 80 g/m².

La nappe est déposée sur un tapis puis consolidée par une opération de liage hydraulique en 15.

L'opération de liage hydraulique consiste à faire traverser la nappe disposée sur un tambour rotatif par des jets d'eau très fins sous haute pression (40 à 200 bars).

En rebondissant sur le tambour, les jets d'eau provoquent un nouage des fibres d'un voile à l'autre conférant à la nappe une résistance mécanique importante sans pour autant en augmenter, de manière conséquente, la densité et emprisonnant les granulés de charbon actif.

Après passage dans un dispositif de séchage 16, la nappe est enroulée en 17.

La nappe est ensuite reprise pour subir une opération de plissage et se trouve alors prête à être montée sur un support pour former le dispositif de filtration comme indiqué précédemment.

On a réalisé des essais avec des échantillons présentant les caractéristiques suivantes :
- dimensions du sous-ensemble filtrant :

| | |
|---|---|
| longueur | 335 mm |
| largeur | 150 mm |
| épaisseur | 35 mm |

- fibres constitutives de chaque voile de non-tissé : fibres de polypropylène d'une finesse de 2,8 dtex
- masse surfacique totale : 420 g/m²
- pourcentage de non-tissé : 24 %
- pourcentage de charbon actif:76%, correspondant à une masse de 83 g de charbon actif auxquels on a fait subir les essais suivants :

### 1ère série d'essais

Le filtre est placé dans une veine d'air comportant des particules d'une dimension moyenne de 0,5 µm, ayant fait l'objet préalablement d'une neutralisation des éventuelles charges électrostatiques au moyen d'une décharge par effet Corona, ayant un débit de 450 m³/h jusqu'à ce que la perte de charge provoquée par la retenue des particules atteigne 450 Pa.

### 2e série d'essais

Le filtre est placé dans une veine d'air contenant les gaz nocifs suivants :
- n-butane dans une concentration de 80 ppm
- toluène dans une concentration de 80 ppm
- dioxyde de soufre dans une concentration de 30 ppm

La valeur d'adsorption des gaz nocifs est mesurée en intégrant la courbe d'adsorption entre le début de l'essai et le point où l'efficacité atteint la valeur de 5 %.

Les résultats des différents essais sont les suivants :

| Perte de charge | Efficacité particules à 0,5 µm | Efficacité n-butane | Efficacité toluène | Efficacité SO2 | Capacité adsorption n-butane | Capacité adsorption toluène | Capacité adsorption SO2 |
|---|---|---|---|---|---|---|---|
| 124 Pa | 33% | 78% | 85% | 90% | 2,42 g | 30 g | 2,5 g |

On notera l'excellente capacité de retenue des particules et la faible perte de charge introduite par le filtre.

En ce qui concerne l'efficacité vis-à-vis des gaz nocifs, on sait, par expérience, que pour qu'un dispositif de filtration équipant un appareil d'aération et/ou de chauffage et/ou de climatisation de véhicule automobile soit efficace pendant une durée correspondant à un parcours moyen de 30.000 km pour le véhicule, doit présenter les caractéristiques suivantes :

| Efficacité n-butane | Efficacité toluène | Efficacité SO2 | Capacité adsorption n-butane | Capacité adsorption toluène | Capacité adsorption SO2 |
|---|---|---|---|---|---|
| >50% | >65% | >50% | 1,5 g | 20 g | 1,5 g |

Ces valeurs sont obtenues en général avec, au minimum, 100 g de charbon actif.

On en déduit, par conséquent, que le dispositif de filtration selon l'invention présente de remarquables performances.

## Revendications

1. Dispositif de filtration combiné susceptible de retenir des particules ainsi que des gaz, plus particulièrement destiné à l'épuration de l'air destiné à l'aération et/ou au chauffage et/ou à la climatisation de locaux ou de véhicules automobiles, caractérisé en ce qu'il comprend deux couches de non-tissé entre lesquelles sont disposés des granulés de charbon actif et en ce que les deux couches de non-tissé s'interpénètrent, au moins partiellement, de manière à emprisonner les granulés de charbon actif.

2. Dispositif de filtration selon la revendication 1, caractérisé en ce que la première couche de non-tissé et/ou la seconde couche de non-tissé est/sont formée(s) d'un voile de carde isotrope ou anisotrope comprenant des fibres de même nature ou un mélange de fibres différentes.

3. Dispositif de filtration selon la revendication 2, caractérisé en ce que ledit voile est en une seule couche.

4. Dispositif de filtration selon la revendication 2 ou la revendication 3, caractérisé en ce que la longueur desdites fibres est au moins égale à 5 mm.

5. Dispositif de filtration selon l'une des revendications 2 à 4, caractérisé en ce que la longueur desdites fibres est au plus égale à 120 mm.

6. Dispositif de filtration selon l'une des revendications 2 à 5, caractérisé en ce que le diamètre moyen desdites fibres est au moins égale à 1 µm.

7. Dispositif de filtration selon l'une des revendications 2 à 6, caractérisé en ce que lesdites fibres sont choisies parmi le groupe des fibres thermoplastiques telles que les fibres de polypropylène, de polyéthylène, de polyimide, de polyester, de polycarbonate, de polyamide, le groupe des fibres acryliques, des fibres acryliques préoxydées, le groupe des fibres aramides, le groupe des fibres phénoliques, le groupe des fibres fluorocarbonées, le groupe des fibres minérales telles que les fibres de verre, le groupe des fibres métalliques.

8. Dispositif de filtration selon l'une des revendications précédentes, caractérisé en ce que les granulés de charbon actif ont une taille comprise entre 20 et 50 mesh et une surface spécifique de 500 à 2000 g/m².

9. Dispositif de filtration selon l'une des revendications précédentes, caractérisé en ce que la quantité de charbon actif représente de 5 à 95 % de la masse de l'ensemble première couche de non-tissé, lit de charbon actif, seconde couche de non-tissé.

10. Dispositif de filtration selon l'une des revendications précédentes, caractérisé en ce que la masse surfacique dudit ensemble est comprise entre 50 et 600 g/m².

11. Procédé de réalisation d'un dispositif de filtration combiné susceptible de retenir des particules ainsi que des gaz, caractérisé par les étapes suivantes :
a) une première couche de non-tissé est réalisée ;
b) des granulés de charbon actif sont déposés sur ladite première couche de non-tissé pour former un lit de charbon actif ;
c) une seconde couche de non-tissé est déposée sur ledit lit de charbon actif ;
d) l'ensemble constitué de la première couche de non-tissé, du lit de charbon actif et de la seconde couche de non-tissé est l'objet d'une opération de consolidation mécanique.

12. Procédé de réalisation d'un dispositif de filtration combiné susceptible de retenir des particules ainsi que des gaz selon la revendication 11, caractérisé en ce que l'opération de consolidation mécanique est réalisée par liage hydraulique.

13. Procédé de réalisation d'un dispositif de filtration combiné susceptible de retenir des particules ainsi que des gaz selon la revendication 12, caractérisé en ce que, après liage hydraulique ledit ensemble subit une opération de séchage.

14. Procédé de réalisation d'un dispositif de filtration combiné susceptible de retenir des particules ainsi que des gaz selon l'une des revendications 11 à 13, caractérisé en ce que l'ensemble première couche de non-tissé, lit de charbon actif, seconde couche de non-tissé, subit après la consolidation mécanique et avant ou après séchage, une opération de plissage.

15. Procédé de réalisation d'un dispositif de filtration combiné susceptible de retenir des particules ainsi que des gaz selon l'une des revendications 11 à 13, caractérisé en ce que, après l'étape a) et avant l'étape b) ci-dessus, la première couche de non-tissé subit une opération de consolidation mécanique au moyen d'un liage hydraulique.

16. Procédé de réalisation d'un dispositif de filtration combiné susceptible de retenir des particules ainsi que des gaz selon la revendication 15, caractérisé en ce que, à l'étape b) ci-dessus, les granulés de charbon actif sont déposés sur la première couche de non-tissé humide, ce qui facilite et assure le maintien en place des granulés jusqu'à l'étape d) ci-dessus.

17. Procédé de réalisation d'un dispositif de filtration combiné susceptible de retenir des particules ainsi que des gaz selon l'une des revendications 11 à 16, caractérisé en ce que la première couche de non-tissé et/ou la seconde couche de non-tissé est/sont obtenue(s) par une opération de cardage de fibres présentant une longueur comprise entre 38 mm et 120 mm et un diamètre supérieur à 1 µm, pour former un voile de carde isotrope.

18. Procédé de réalisation d'un dispositif de filtration combiné susceptible de retenir des particules ainsi que des gaz selon l'une des revendications 12 ou 15, caractérisé en ce que le liage hydraulique consiste à faire traverser le voile disposé sur un tambour rotation par des jets d'eau très fins sous haute pression.

19. Procédé de réalisation d'un dispositif de filtration combiné susceptible de retenir des particules ainsi que des gaz selon la revendication 18, caractérisé en ce que la pression des jets d'eau est comprise entre 40 et 200 bars.
